# EUROPEAN PATENT SPECIFICATION

(11) **EP 2 813 681 B1**
(45) Date of publication and mention of the grant of the patent: **15.03.2017**
(21) Application number: 13172007.0
(22) Date of filing: 14.06.2013
(51) Int. Cl.: F01P 3/20, F02B 29/04, F02M 26/00

(54) **System for treating EGR gases, in particular in the nautical field**
System zur Behandlung von rückgeführtem Abgas, insbesondere im nautischen Bereich
Système pour traiter les gaz d'échappement recircules, en particulier dans le domaine nautique

(43) Date of publication of application: 17.12.2014
(73) Proprietor: FPT Industrial S.p.A., 10156 Torino (IT)
(72) Inventor: D'Epiro, Clino, 10091 Alpignano (IT)
(74) Representative: Franzolin, Luigi

(56) References cited:
- WO-A1-02/075141
- DE-A1- 2 504 308
- GB-A- 1 183 988
- US-A- 5 657 630
- US-A1- 2009 032 000
- US-B1- 6 748 906

## Description

### Application field of the invention

The present invention refers to the field of systems for cooling and purifying recirculated exhaust gases, in particular in the nautical field.

### Description of the prior art

Systems for washing the recirculated exhaust gases EGR in the nautical field are known in the art.

There are essentially two methods to perform such operation by means of a washing liquid. In one of these methods, the liquid is sprayed in a duct which recirculates the exhaust gases, so that the water particles incorporate the molecules of noxious gas and particulate contained in the exhaust gas.

An example of such technique is described in US5657630.

The other method is by bubbling. Namely the exhaust gas are bubbled in a closed container - from the point of view of the liquid - containing a washing liquid. An example of such technique is described in GB1422332 and US2009032000.

According to US2009032000 the whole exhaust gas flow is introduced in the washing tank and part of the flow is diverted to be introduced in the purifying liquid. Gases are thus purified and gathered in an upper part of the tank, from which they are reintroduced in the engine.

According to US2009032000, the exhaust duct passing through the tank has an input, a main output and a secondary output opening in the tank, for the washing of the exhaust gas to be recirculated.

Both according to the bubbling and to the spraying washing technique, the purification takes place in a closed environment. The washing water is thus purified, in its turn, and recirculated in a closed cycle.

### Summary of the invention

Therefore the aim of the present invention is to indicate a system for purifying the EGR in the nautical field, preferably by bubbling in a washing liquid, which overcomes the problems of the technique known in the art, by simplifying the exhaust gas purification.

Another aim of the present invention is to make the system stable, even when the washing liquid is provided by the environment, namely it is withdrawn and released in the environment. Namely when the washing liquid is the water of the sea, of the river or of the lake in which the system has to work.

A further aim of the present invention is to recirculate the exhaust gases at a pressure higher than the fresh air pressure at the intake manifold, in order to avoid using specific compressors.

According to the present invention, the washing liquid allows not only to purify, but also to cool the recirculated EGR without using a heat exchanger wherein there is a full separation between cooling liquid and an EGR gas. Thus, the present invention can be particularly applied in the nautical field.

The object of the present invention is a system for treating EGR gases, in particular in the nautical field, in accordance with claim 1.

According to a preferred alternative embodiment of the present invention, it is not the whole exhaust gas flow that passes through the washing tank, but only the exhaust gas of a predefined number of cylinders of the engine. Thus the washing tank comprises a single input opening and a single output opening of the exhaust gases.

The use of donor cylinders for the exhaust gas recirculation is disclosed by JP58096159. Such technique, even though it is really outdated, has never been considered in combination with either the exhaust gas purification by washing or the EGR gas cooling by bubbling.

The use of one or more donor cylinders allows to operate the aforementioned washing at a higher pressure than the environmental pressure allowing to better overcome the pressure losses due to the washing of the EGR gases.

In some circumstances, this allows to avoid the use of an additional compressor, in order to obtain the necessary overpressure of the exhaust gases to realize the aforementioned recirculation, especially when the engine is equipped with a turbosupercharger.

According to a preferred alternative embodiment of the invention, the washing is made by bubbling and the washing tank comprises a single input opening and a single output opening of the purification water, wherein the water is directly withdrawn from the operation environment, namely it is sea water, lake water or river water.

According to a further preferred alternative embodiment of the invention, the number of cylinders intended to pump the exhaust gas through the washing tank can be varied by appropriate valves and/or bypass means. Advantageously, the quantity of recirculated EGR can be controlled in a much more precise way.

Advantageously, the EGR is recirculated with a higher pressure than the environmental pressure without using specific compressors.

Advantageously, the traction system can use one or more turbosupercharging units without forcing a low pressure EGR recirculation, namely upstream of the turbosupercharging units.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows the a scheme in outline of a first alternative embodiment of the system that is object of the present invention;
figure 2 shows an alternative embodiment of the scheme of figure 1 wherein the use of a donor cylinder permanently separated from the others is clearly shown;
figure 3 shows a further alternative embodiment of the scheme of figure 1, wherein the donor cylinder is separable from the others.

In the figures the same reference numbers and letters identify the same elements or components.

### Detailed description of preferred embodiments of the invention

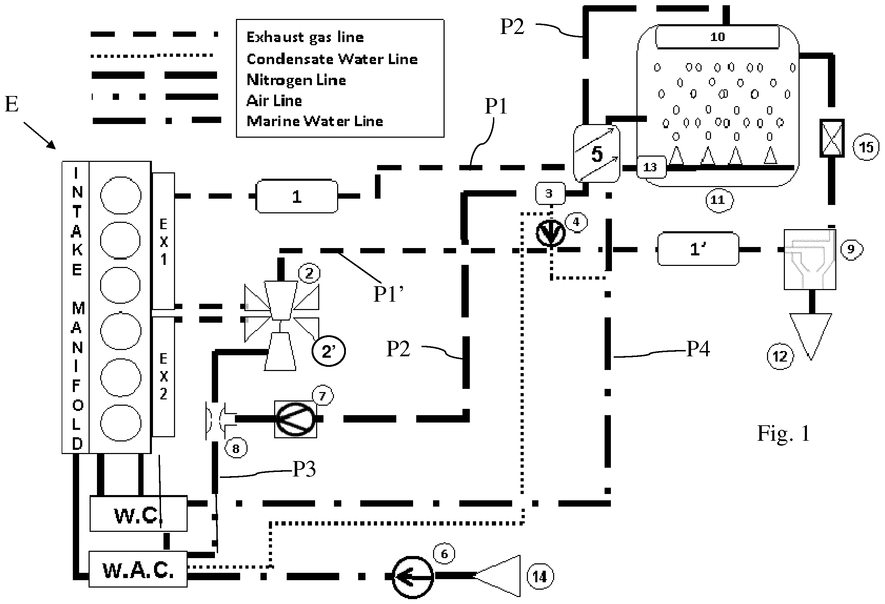

Figure 1 shows an outline of an example of implementation of the present invention. An internal combustion E, preferably of the four-stroke diesel type, is equipped with one or two exhaust manifolds independent of one another, EX1, EX2.

The output of each one of them is connected to the turbine 2 that drives the supercharger 2'. The supercharger compresses fresh air from the environment to send it to a WAC cooler, which is a heat exchanger of the type water/air wherein the cooling water is water withdrawn from the environment, namely sea water, river water, lake water.

The sign 14 indicates a water intake generally installed below the hull wherein the present system is intended to be housed.

A pump 6, interposed between the water intake and the WAC, provides the withdrawal of the ambient water for cooling the internal combustion engine E and for purifying/refrigerating the EGR gas.

Thus the engine refrigeration is realized by means of the ambient water, either by direct circulation of the ambient water through the engine, or by indirect circulation by means of a closed circuit coupled to an open circuit for the circulation of the ambient water. In such second case a suitable heat exchanger WC is provided to transfer the heat of a closed circuit to the ambient water treated in an open circuit.

According to a preferred alternative embodiment of the invention, the water/water heat exchanger WC is connected in series to the exchanger WAC and preferably downstream of the latter, according to direction of circulation of the ambient water.

The ambient water, after having cooled the fresh air and/or the engine E, reaches a purification/cooling tank of the exhaust gases 11 by means of the duct P4.

A duct P1 connects at least one of the exhaust manifolds EX1 (EX3) with a lower part of such purification tank 11.

Thus the turbosupercharger unit 2, 2' and the tank are in parallel between each other. In other words, the purification/refrigeration of the EGR gas is operated at high pressure, not downstream of the turbosupercharger unit.

A catalyst of the DOC (Diesel Oxidation Catalyst) type 1 is optionally installed on such duct, so that the exhaust gases are first purified from HC+PM, and then a further purification/cooling takes place in the tank 11.

The gas to be recirculated is thus bubbled from the bottom of the tank and it is gathered at the top 10 of the tank. The bubbling can be operated by a diffuser or by appropriate nozzles.

A duct P2 connects the upper part of the tank 11 with the intake duct P3, preferably in the segment between the supercharger 2' and the cooler WAC.

A check valve 7 can be arranged on such duct P2 and the introduction of the recirculated gas can be facilitated by a Venturi tube of by a mixer 8, in general.

Since the ambient water flows continuously, it is never saturated by CO2 which is adsorbed in water.

Thus the gas purified/cooled gathered in the upper part of the tank is substantially Nitrogen.

In order to avoid the introduction of ambient water in the intake manifold, a control valve 15 regulates the drain of ambient water from the tank 11, in order to keep the level of liquid substantially constant inside the tank.

Similarly, in order to prevent the ambient water to flow back to DOC 1, water block means are provided, such as a sharp bend or a valve to block the liquids.

The tank is connected, by the aforementioned exhaust gas 15, to a mixer 9, to which also the output of the turbine 2 is connected by the duct P1', so that the ambient water (namely the refrigeration/purification water) and the exhaust gas coming from the turbine are mixed and dispersed in the environment. Reference 12 indicates the opening for discharging water and exhaust gas dispersed in the environment.

Optionally a further DOC 1' can be provided between the mixer 9 and the turbine 2.

The duct P1 for withdrawing purified/cooled gas from the tank 11, can preferably pass through a condenser 5 that allows the dehydration of such gases to be recirculated. The gas/liquid separator 3 is arranged downstream of the condenser 5 according to the direction of circulation of the recirculated gases. The liquid separated can be dispersed in the environment or it can be reintroduced in the tank 11 by a pump 4, or it can be brought to the WAC (intercooler) where the condensate extracted from the fresh air by the intercooler WAC itself usually gathers.

Preferably such condenser 5 is of the Air/Water type and is fed by the same ambient water, being it connected upstream of the tank 11, before introducing the water in the purification/cooling tank 11.

More in particular, the condenser 5 is placed on the duct P4 which connects the WC to the lower part of the tank 11 and on the duct P2 which connects the upper part of the tank 11 to the engine intake.

Since the purification of the exhaust gases EGR takes placed in an open cycle, a part of the purified gas can be carried away by means of the tank drain, above all because of the high speed of the hull which impose a larger water flow passing through the tank 11.

In relation to figure 1, in order to obtain a correct discharge of the EGR gases through the tank 11, different solutions can be followed, among which some of the preferred are:
- using an asymmetric twin-scroll turbine, namely having the smaller scroll connected to the manifold EX1;
- installing a symmetric turbine, but with under-dimensioned scrolls and respective Westgate valves;
- using a symmetric twin-scroll turbine, wherein both scrolls have a controllable and variable geometry.

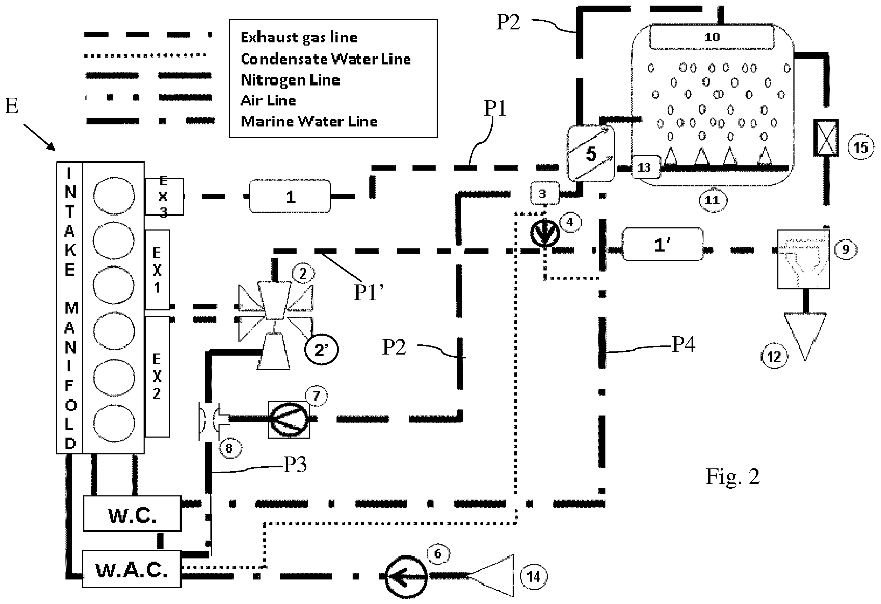

According to a preferred alternative embodiment of the present invention shown in figure 2, an exhaust manifold EX3 is connected to said duct P1 connecting to the tank 11.

Moreover, the same manifold EX3 is separated from the other exhaust manifolds EX1 and EX2. Alternatively, the exhaust manifold EX3 is separated by the exhaust manifold EX2 and is separable/connectable with the other exhaust manifold EX1.

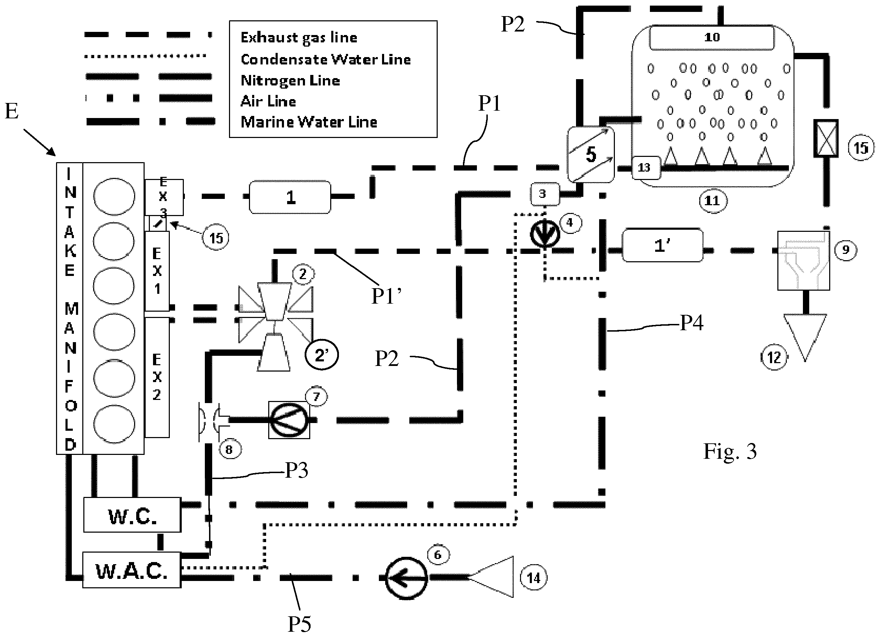

The valve 15, shown in figure 3, allows to separate/connect the exhaust manifold EX3 with respect to EX1. According to the solutions shown in figures 2 and 3, it is possible to define in a clear way the number of cylinders called "donor cylinders".

Thus, a predefined number of cylinders can be used to pump exhaust gases towards the aforementioned tank 11, regardless of the losses introduced in the tank itself, of the mass of CO2 adsorbed in the purification liquid and of the mass of Nitrogen carried away. All this without using any pump to compress the recirculated gas at a pressure at least equal to the supercharging pressure imposed by supercharger 2'.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. System for treating the EGR gases, in particular in the nautical field, of an internal combustion engine (E), the system being equipped with means for withdrawing (14) and dispersing (12), in an open circuit, water available in the environment to cool an internal combustion engine (E), the system comprising cool and purify means (11, 10, 5) comprising a purification/cooling tank (11) to cool and purify said EGR gases by means of said water to cool the combustion engine in such a way that said water, after having cooled the combustion engine (E), reaches said purification/cooling tank (11) by means of a duct (P4) and wherein said purification/cooling tank (11) is suitable to be partially filled by said water in order to bubble said EGR gas from the bottom to the top and means to gather and recirculate (10, P2) said EGR gas cooled and purified.

2. System according to claim 1, wherein said means for gathering and recirculating said EGR gas purified and cooled comprise a recirculation duct (P2) connecting an upper part (10) of said bubbling tank and an intake duct (P3) of the internal combustion engine (E).

3. System according to any one of the preceding claims, wherein said internal combustion engine (E) is supercharged by a turbosupercharging unit (2, 2') and wherein said turbosupercharger is in parallel to said means (11, 10, 5) to cool and to purify said EGR gas.

4. System according to claims 2 and 3, wherein said intake duct (P3) is arranged downstream with respect to an output of a supercharger (2') of said turbosupercharging unit (2, 2') and an intake manifold of the internal combustion engine.

5. System according to claim 4, wherein said recirculation duct (P2) flows in said intake duct (P3) of the internal combustion engine (E) by means of a mixed or a Venturi tube (8).

6. System according to one of the preceding claims, further comprising an intercooler (WAC) of the water/air type, fed by said cooling water.

7. System according to one of the preceding claims, further comprising a heat exchanger of the water/water type (WC) to refrigerate said internal combustion engine (E), fed by said cooling water.

8. System according to claims 6 or 7, wherein said cooling/purification tank (11) is arranged downstream of said heat exchanger (WC), the latter being arranged downstream of said intercooler (WAC), according to a direction of circulation of said cooling water.

9. System according to any one of the preceding claims, further comprising means for regulating (15) the discharge of said cooling water.

10. System according to claim 9, wherein said regulation means (15) comprise a drain valve (11) controlled as a function of a level of the cooling water in the buffering tank (11).

11. System according to any one of the preceding claims, further comprising means for dehydrating (5) the cooled and purified EGR gases.

12. System according to claim 11, wherein said dehydration means (5) comprise a condenser (5) of the gas/water type, fed, on the water side, by said cooling water, being connected in series and upstream of said bubbling tank (11), and connected, on the gas side, downstream of said bubbling tank (11) on said recirculation duct (P2).

13. System according to any one of the previous claims, wherein said internal combustion engine comprises at least a first exhaust manifold (EX1, EX2) relating to a first group of cylinders and a second exhaust manifold (EX3) relating to a second group of cylinders, wherein said second exhaust manifold (EX3) is connected to said bubbling tank (11) by means of a duct (P1) and wherein said second exhaust manifold is separated or separable from said first exhaust manifold.

14. System according to claim 13, wherein a valve (15) determines the connection/separation of said second exhaust manifold (EX3) with/from the fist exhaust manifold (EX1).

## Patentansprüche

1. System zum Behandeln der Abgasrückführungsgase, speziell im nautischen Bereich, einer Brennkraftmaschine (E), wobei das System mit Mitteln zum Absaugen (14) und Dispergieren (12) von Wasser, das in der Umgebung verfügbar ist, um eine Brennkraftmaschine (E) zu kühlen, in einem offenen Kreis ausgestattet ist, wobei das System Kühlmittel und Reinigungsmittel (11, 10, 5) umfasst, die einen Reinigungstank/Kühltank (11) umfassen, um die Abgasrückführungsgase durch das Wasser zu kühlen und zu reinigen, um die Brennkraftmaschine so zu kühlen, dass das Wasser den Reinigungstank/Kühltank (11) durch ein Rohr (P4) erreicht, nachdem es die Brennkraftmaschine (E) gekühlt hat, und wobei der Reinigungstank/Kühltank (11) mit dem Wasser teilweise gefüllt sein kann, um das Abgasrückführungsgas von dem unteren Ende zu dem oberen Ende und zu Mitteln zum Sammeln und Zurückführen (10, P2) des gekühlten und gereinigten Abgasrückführungsgases sprudeln zu lassen.

2. System nach Anspruch 1, wobei die Mittel zum Sammeln und Zurückführen des gereinigten und gekühlten Abgasrückführungsgases ein Rückführungsrohr (P2), das einen oberen Teil (10) des Sprudeltanks und ein Einlassrohr (P3) der Brennkraftmaschine (E) verbindet, umfassen.

3. System nach einem der vorhergehenden Ansprüche, wobei die Brennkraftmaschine (E) durch eine Abgasturboladereinheit (2, 2') aufgeladen ist und wobei der Abgasturbolader zu den Mitteln (11, 10, 5) parallel angeordnet ist, um das Abgasrückführungsgas zu kühlen und zu reinigen.

4. System nach Anspruch 2 und 3, wobei das Einlassrohr (P3) bezüglich eines Ausgangs eines Laders (2') der Abgasturboladereinheit (2, 2') und eines Einlasskrümmers der Brennkraftmaschine stromabwärts angeordnet ist.

5. System nach Anspruch 4, wobei das Rückführungsrohr (P2) in dem Einlassrohr (P3) der Brennkraftmaschine (E) durch ein gemischtes Rohr oder ein Venturi-Rohr (8) einen Fluss bewirkt.

6. System nach einem der vorhergehenden Ansprüche, das ferner einen Ladeluftkühler (WAC) des Wasser/Luft-Typs, dem das Kühlwasser zugeführt wird, umfasst.

7. System nach einem der vorhergehenden Ansprüche, das ferner einen Wärmetauscher des Wasser/Wasser-Typs (WC), dem das Kühlwasser zugeführt wird, um die Brennkraftmaschine (E) zu kühlen, umfasst.

8. System nach Anspruch 6 oder 7, wobei der Kühltank/Reinigungstank (11) stromabwärts des Wärmetauschers (WC) angeordnet ist, wobei letzterer gemäß einer Richtung der Umwälzung des Kühlwassers stromabwärts des Ladeluftkühlers (WAC) angeordnet ist.

9. System nach einem der vorhergehenden Ansprüche, das ferner Mittel zum Regulieren (15) der Förderung des Kühlwassers umfasst.

10. System nach Anspruch 9, wobei die Regulierungsmittel (15) ein Ablassventil (11), das als eine Funktion eines Pegels des Kühlwassers in dem Puffertank (11) gesteuert wird, umfassen.

11. System nach einem der vorhergehenden Ansprüche, das ferner Mittel zum Entwässern (5) der gekühlten und gereinigten Abgasrückführungsgase umfasst.

12. System nach Anspruch 11, wobei die Entwässerungsmittel (5) einen Kondensator (5) des Gas/Wasser-Typs, dem auf der Wasserseite das Kühlwasser zugeführt wird, der Sprudeltank (11) vorgeschaltet und in Reihe damit verbunden ist und der dem Sprudeltank (11) auf der Gasseite in dem Rückführungsrohr (P2) nachgeschaltet ist, umfassen.

13. System nach einem der vorhergehenden Ansprüche, wobei die Brennkraftmaschine mindestens einen ersten Abgaskrümmer (EX1, EX2), der einer ersten Gruppe von Zylindern zugeordnet ist, und einen zweiten Abgaskrümmer (EX3), der einer zweiten Gruppe von Zylindern zugeordnet ist, umfasst, wobei der zweite Abgaskrümmer (EX3) durch ein Rohr (P1) mit dem Sprudeltank (11) verbunden ist und wobei der zweite Abgaskrümmer von dem ersten Abgaskrümmer getrennt ist oder von diesem getrennt werden kann.

14. System nach Anspruch 13, wobei ein Ventil (15) die Verbindung/Trennung des zweiten Abgaskrümmers (EX3) mit/von dem ersten Abgaskrümmer (EX1) bestimmt.

## Revendications

1. Système de traitement des gaz d'échappement recirculés EGR, en particulier dans le domaine nautique, d'un moteur à combustion interne (E), le système étant équipé d'un moyen de retrait (14) et de dispersion (12), dans un circuit ouvert, d'eau disponible dans l'environnement pour refroidir un moteur à combustion interne (E), le système comprenant des moyens de refroidissement et de purification (11, 10, 5) comprenant un réservoir de purification/refroidissement (11) pour refroidir et purifier lesdits gaz EGR au moyen de ladite eau pour refroidir le moteur à combustion de telle sorte que ladite eau, après avoir refroidi le moteur à combustion (E), atteint ledit réservoir de purification/refroidissement (11) au moyen d'un conduit (P4) et dans lequel ledit réservoir de purification/refroidissement (11) est approprié pour être partiellement rempli avec ladite eau afin de faire barboter ledit gaz EGR du fond jusqu'à la surface et de moyens pour collecter et faire recirculer (10, P2) ledit gaz EGR refroidi et purifié.

2. Système selon la revendication 1, dans lequel ledit moyen de collecte et de recirculation dudit gaz EGR purifié et refroidi comprend un conduit de recirculation (P2) reliant une partie supérieure (10) dudit réservoir de barbotage et un conduit d'admission (P3) du moteur à combustion interne (E).

3. Système selon l'une quelconque des revendications précédentes, dans lequel ledit moteur à combustion interne (E) est suralimenté par une unité de turbocompression (2, 2') et dans lequel ledit turbocompresseur est en parallèle avec lesdits moyens (11, 10, 5) pour refroidir et purifier ledit gaz EGR.

4. Système selon les revendications 2 et 3, dans lequel ledit conduit d'admission (P3) est disposé en aval par rapport à une sortie d'un surcompresseur (2') de ladite unité de turbocompression (2, 2') et d'un collecteur d'admission du moteur à combustion interne.

5. Système selon la revendication 4, dans lequel ledit conduit de recirculation (P2) s'écoule dans ledit conduit d'admission (P3) du moteur à combustion interne (E) au moyen d'un tube mixte ou de Venturi (8).

6. Système selon l'une des revendications précédentes, comprenant en outre un refroidisseur intermédiaire (WAC) du type eau/air, alimenté par ladite eau de refroidissement.

7. Système selon l'une des revendications précédentes, comprenant en outre un échangeur thermique du type eau/eau (WC) pour réfrigérer ledit moteur à combustion interne (E), alimenté par ladite eau de refroidissement.

8. Système selon les revendications 6 ou 7, dans lequel ledit réservoir de refroidissement/purification (11) est disposé en aval dudit échangeur thermique (WC), ce dernier étant disposé en aval dudit refroidisseur intermédiaire (WAC), selon une direction de circulation de ladite eau de refroidissement.

9. Système selon l'une quelconque des revendications précédentes, comprenant en outre des moyens de régulation (15) de l'évacuation de ladite eau de refroidissement.

10. Système selon la revendication 9, dans lequel lesdits moyens de régulation (15) comprennent une soupape de purge (11) contrôlée en fonction d'un niveau de l'eau de refroidissement dans le réservoir tampon (11).

11. Système selon l'une quelconque des revendications précédentes, comprenant en outre des moyens de déshydratation (5) des gaz EGR refroidis et purifiés.

12. Système selon la revendication 11, dans lequel lesdits moyens de déshydratation (5) comprennent un condenseur (5) du type gaz/eau, alimenté, du côté eau, par ladite eau de refroidissement, qui est relié en série et en amont dudit réservoir de barbotage (11), et relié, du côté gaz, en aval dudit réservoir de barbotage (11) sur ledit conduit de recirculation (P2).

13. Système selon l'une quelconque des revendications précédentes, dans lequel ledit moteur à combustion interne comprend au moins un premier collecteur d'échappement (EX1, EX2) en relation avec un premier groupe de cylindres et un second collecteur d'échappement (EX3) en relation avec un second groupe de cylindres, dans lequel ledit second collecteur d'échappement (EX3) est relié audit réservoir de barbotage (11) au moyen d'un conduit (P1) et dans lequel ledit second collecteur d'échappement est séparé ou séparable dudit premier collecteur d'échappement.

14. Système selon la revendication 13, dans lequel une soupape (15) détermine la liaison/séparation dudit second collecteur d'échappement (EX3) avec le/du premier collecteur d'échappement (EX1).
